# EUROPÄISCHE PATENTSCHRIFT

(11) **EP 1 902 289 B1**
(45) Veröffentlichungstag und Bekanntmachung des Hinweises auf die Patenterteilung: **11.04.2012**
(21) Anmeldenummer: 06761746.4
(22) Anmeldetag: 01.07.2006
(51) Int. Cl.: G01L 5/00

(54) **Lageranordnung zur Lagerung wenigstens eines Maschinenelements an einer Stütze**
Bearing arrangement for mounting at least one machine element on a support
Ensemble palier pour le logement d'au moins un élément de machine sur un support

(30) Priorität: 09.07.2005 DE 102005032222
(43) Veröffentlichungstag der Anmeldung: 26.03.2008
(73) Patentinhaber: Schaeffler Technologies AG & Co. KG, 91074 Herzogenaurach (DE)
(72) Erfinder: HEIM, Jens, 97493 Bergrheinfeld (DE); NIEBLING, Peter, 97688 Bad Kissingen (DE); RUOFF, Gottfried, 97464 Oberwerrn (DE); DLUGAI, Darius, 97421 Schweinfurt (DE); MOCK, Christian, 97493 Bergrheinfeld (DE)
(86) Internationale Anmeldenummer: PCT/DE2006/001144
(87) Internationale Veröffentlichungsnummer: WO 2007/006262

(56) Entgegenhaltungen:
- WO-A-02/04906
- WO-A-02/44678
- WO-A-02/057730
- DE-A1- 2 743 813
- DE-U1- 8 816 453
- US-A- 4 735 102

## Beschreibung

### Gebiet der Erfindung

Lageranordnung zur Lagerung wenigstens eines Maschinenelements an einer Stütze, wobei das Maschinenelement an der Stütze beweglich gelagert ist, die Lageranordnung mit wenigstens einer Messhülse und mit mindestens einem Messelement an der Messhülse, wobei die Messhülse separat zur Stütze ausgebildet ist und wobei das Messelement zumindest zum Messen von physikalischen Größen und Prozessen in der Lageranordnung vorgesehen ist.

### Hintergrund der Erfindung

Eine derartige Lageranordnung ist in dem Abstract zur Veröffentlichung der japanischen Patentanmeldung JP58017328 A beschrieben. Es ist üblich, die Messhülsen zwischen dem Lager und der Stütze für das Lager anzuordnen. Die Stütze ist in der Regel ein Gehäuse oder der Teil eines Gehäuses, in dem oder an dem das Maschinenelement angeordnet ist. Die Stütze kann aber auch ein separater Lagerbock oder ähnliches sein, mit dem das Maschinenelement gelagert ist. Das Maschinenelement ist beispielsweise eine Achse oder Welle, die mittels der Lageranordnung drehbar zur Stütze gelagert ist. Die jeweilige Messhülse in Lageranordnungen nach dem Stand der Technik ist radial zwischen dem Außenring des Lagers und dem Sitz im Gehäuse angeordnet. Die Messhülse ist zum Beispiel mit Dehnmessstreifen versehen, die auf elastische Formänderungen der Messhülse reagieren. Die Formänderungen resultieren aus Reaktionsstützkräften und Verlagerungen, die durch das mit Kräften/Momenten belastete Maschinenelement im Lager verursacht werden.

Die Genauigkeit der Messergebnisse in derartigen Anordnungen des Standes der Technik ist von vielen Faktoren abhängig und deshalb unter Umständen ungenügend. Die Messergebnisse sind zum Beispiel von der Steifigkeit der Stütze und von den Einbautoleranzen, von Temperatureinflüssen und von Wärmeausdehnungskoeffizienten der Werkstoffe des Gehäuses sowie des Lagerringes abhängig.

Dehnmesselemente oder ähnliches werden vor dem Betrieb der Lageranordnung auf einen vorbestimmten Ausgangszustand kalibriert. Die Messeinrichtung in Lageranordnungen des Standes der Technik wird in Getrieben an der fertig ins Gehäuse montierten Lageranordnung vorgenommen, da zum Beispiel die Vorspannung eines Presssitzes oder die Vorspannungen mittels Schraubverbindungen auf die Messhülse bei der Eichung berücksichtigt werden müssen. Die Vorspannung, die sich in Formänderungen im Lager widerspiegelt, ist von den vorgenannten Toleranzen abhängig und schwankt vom Einbau in einem Getriebe zum nächsten Einbau in einem anderen Getriebe, so dass die Messeinrichtungen für jedes Getriebe individuell abgestimmt werden müssen. Die Zeiten für die Montage des Getriebes erhöhen sich. Lageranordnungen mit Messeinrichtungen der gattungsbildenden Art haben sich deshalb bisher aus Kostengründen in Getrieben der Großserie nicht durchgesetzt.

In einer vorgespannten Lageranordnung, in der sich der Wärmeausdehnungskoeffizient des Werkstoffes der Messhülse von dem Wärmeausdehnungskoeffizienten des Lagerringes bzw. des Gehäuses unterscheidet, können Wechsel in der Betriebstemperatur zu irreführenden Messergebnissen führen. Es ist zum Beispiel möglich, dass sich die Vorspannung aufgrund dieses Unterschiedes lockert oder zunimmt. Es ist beabsichtigt nur die Spannungen aus den Belastungen auf das Lager zu messen. Da sich jedoch zeitgleich zu den Belastungen auf das Lager die Vorspannung in der Lageranordnung ändern kann, lässt sich nicht eindeutig feststellen, welche Einflüsse zu den Messergebnissen geführt haben.

Der Bauraum für die entsprechenden Messelemente bzw. entsprechende Sensorik ist beschränkt. Für die Messelemente muss ein entsprechend von Belastungen freier Bereich zwischen dem Lagerring und dem Gehäuse geschaffen werden, da die empfindlichen Messelemente, wie Dehnmessstreifen, z.B. nicht durch Druck belastbar sind.

Der Außenring bzw. die Messhülse neigen zum umfangsseitigen Wandern, so dass zum Beispiel Kabelverbindungen zu den Messelemente durch das Wandern im Laufe der Zeit auf Zug beansprucht und zerstört werden können. Die Zu- bzw. Abführung der Kabel zur Sensorik ist schwierig, da die Kabeldurchführungen in Getrieben zum Beispiel abgedichtet werden müssen.

Aus G 88 16 453.5 U1 ist eine Meßanordnung mit einem Meßkäfig bekannt, die zur Messung von Bahnspannungen an einer Walze vorgesehen ist. Der Meßkäfig weist einen Befestigungsflansch auf und beinhaltet eine Lageranordnung mit einem Innen- und Außenring zur Lagerung der Walzenwelle.

Aus WO 02/44678 A1 ist ein Sensorring bekannt, der ein Kegelrollenlanger mit Innen- und Außenring trägt und über dieses Kräfte erfährt, die an geeigneten Meßstellen am Sensorring detektiert werden.

Aus WO 02/04906 A1 und WO 02/057730 A1 sind Radteststationen bekannt, die zur Messung von Kräften dienen, die am Rad und der Felge auftreten.

Aus US 4 735 102 und DE 2743813 A1 sind Lagerkraftmesseinrichtungen bekannt, die beide eine Welle mittels eines Kugelrollenlagers lagern und den Außenring an einer Messvorrichtung basierend auf Dehnungsmessstreifen befestigen.
Aus US 2005/047692 A1 sind Radlagersensoren bekannt.

### Zusammenfassung der Erfindung

Die Aufgabe der Erfindung ist es daher, eine Lageranordnung zu schaffen, mit der die zuvor genannten Nachteile vermieden werden.

Die Aufgabe ist mit den Merkmalen des Anspruches 1 gelöst. Die Lagerungsanordnung ist an der Messhülse aufgenommen. Das Maschinenelement oder mehrere der Maschinenelemente sind mittels eines oder mehrerer Lager der Lageranordnung in der Messhülse gelagert. Die Messhülse ist an der Stütze, beispielsweise an einer Wand oder an einer Zwischenwand eines Getriebes, fest. Die Stütze kann auch ein Bolzen, eine Welle oder ähnliches sein, auf dem ein Maschinenelement, wie ein Rad mittels der Lageranordnung drehbar gelagert ist. Besonders gut ist die erfindungsgemäße Lageranordnung für die Lagerung von Getriebewellen in Getrieben geeignet.

Die Messhülse trägt das Lager. Das oder die Maschinenelemente sind in bzw. auf der Messhülse gelagert. Sämtliche Betriebsbedingungen, wie Lagerstütz- und Reaktionskräfte, Verschiebungen im Lager oder des Lagers und ggf. Temperaturänderungen werden unbeeinflusst auf die Messhülse übertragen. Die Betriebsbedingungen können an der Messhülse unverfälscht gemessen werden, da die Messhülse mit Lager nur einseitig mit der Stütze verbunden ist und somit weitestgehend von den störenden Einflüssen aus dem Gehäuse, beispielsweise aus einem toleranzabhängigen Presssitz, frei ist. Die entsprechenden Reaktionen aus Kräften, Momenten und Verlagerungen an der Messhülse sind nicht von der Umgebungskonstruktion unmittelbar beeinflusst.

Die Messanordnung kann vor der Montage an die Stütze kalibriert werden, da z.B. die entsprechenden Spiele im Lager schon vor der Montage an das Gehäuse eingestellt sind. Das Lager weist diese Spiele auch noch nach der Montage unverändert auf. Die Vorspannung wird sich durch den Einbau nicht mehr ändern, da das Lager nicht in einen Gehäusesitz eingepresst wird. Das ist insbesondere bei der Anwendung von derartigen Lageranordnungen in Fahrzeuggetrieben von Bedeutung. Die Messhülse bietet außerdem ausreichend Platz für die Anordnung der Messelemente, wie für Messfühler und für andere Sensoren und kann gut gegen Fremdeinwirkungen abgeschirmt bzw. geschützt werden.

Die Messhülse selbst ist vorzugsweise hohlzylindrisch ausgebildet. In der Messhülse sitzt ein oder sitzen Außenringe des Lagers/der Lager. Alternativ sitzt ein oder sitzen mehr Innenringe auf der Messhülse. Eine Ausgestaltung der Erfindung sieht vor, dass die Messhülse Bestandteil des Lagers ist. Die Messhülse weist wenigstens eine jedoch vorzugsweise zwei Laufbahnen auf. Jede der Laufbahnen ist jeweils für eine Reihe von Wälzkörpern des Lagers vorgesehen. Die Messhülse ist ein Innenring wenn die Laufbahn umfangsseitig außen der Messhülse ausgebildet ist oder ist alternativ ein Außenring, an dem die Laufbahn innen umfangsseitig der Messhülse ausgebildet ist.

Die Messhülse ist ein Bauteil, das aus Blech durch Kaltumformen hergestellt und als Ziehteil vorzugsweise napfförmig ausgebildet ist, und das einen Boden sowie einen Kragen aufweist. Der vorzugsweise radial nach außen gerichtete Kragen ist als Flansch ausgebildet. Mit dem Boden ist das Lager oder ein Sitz des Lagers gegen Einflüsse von außen abgeschirmt. Der Kragen ist zu dem Flansch ausgebildet, mit dem die Lageranordnung an der Stütze, zum Beispiel an einem Getriebegehäuse, angeflanscht ist. Die Hülse ist beispielsweise aus ziehbarem Stahl und wahlweise ferromagnetischen Stahl oder nicht ferromagnetischen Stahl.

Die Hülse und/oder der Lagerring sind z. B. mit einer sensorischen Schicht beschichtet. Unter sensorischen Schichten sind alle Schichten zu verstehen, die bei Änderungen von stofftechnischen oder physikalischen Größen ablesbar ihre Eigenschaften ändern.

Das Lager ist, wie eine weitere Ausgestaltung der Erfindung vorsieht, aus zwei konzentrisch zueinander angeordneten und hülsenförmig ausgebildeten Lagerringen gebildet. Beide Ringe sind vorzugsweise Ziehteile und weisen die entsprechenden Laufbahnen für die Wälzkörper auf. Eine der Hülsen ist mit dem Flansch versehen, mit dem die Lageranordnung an der Stütze fest ist. Einer Lagerringe oder alternativ beide der Lagerringe sind als Messhülse ausgelegt.

Die Messhülse im Sinne der erfindungsgemäßen Lageranordnung ist eine Hülse zu verstehen, an der entweder direkt oder indirekt mittels einer entsprechenden Sensorik Änderungen einer oder mehrerer physikalische Grö-βen bzw. Prozesse gemessen werden. Eine Messhülse ist aber auch eine Hülse, die Träger für eine Sensorik ist, mit der von der Hülse entfernt stattfindende Änderungen von Zustandsgrößen und/oder Prozessen erfasst werden. Denkbar sind auch Kombinationen vorgenannter Ausgestaltungen. Beispiele sind:
- Die Messhülse ist eine Dehnmesshülse, die mit entsprechenden Dehnmessfühlern bestückt ist. Die Dehnmesshülse reagiert auf die Belastungen des Maschinenelementes durch elastische Formänderungen. Die Formänderungen werden von den Messfühlern an der Hülse erfasst und an eine entsprechende Auswerteeinrichtung in der Lageranordnung bzw. außerhalb der Lageranordnung weitergeleitet. Das Dehnverhalten derartiger Dehnmesshülsen kann durch entsprechende Gestaltung von Dehnabschnitten der Messhülse gezielt beeinflusst werden. Das ist zum Beispiel durch vorbestimmte Materialquerschnitte oder durch gezieltes Einbringen von Schlitzen und ähnlicher Unterbrechungen bzw. Schwächungen der Struktur der Dehnmesshülse möglich.
- Mit entsprechenden Messfühlern werden an der Messhülse direkt oder in unmittelbarer Umgebung der Messhülse Größen erfasst, die in/an der Struktur der Dehnhülse festzustellen sind. Derartige Größen sind zum Beispiel Änderungen von Magnetismus der Dehnmesshülse, auf die Messhülse übertragene Betriebstemperaturen oder Schwingungen des Lagers. Derartige Messanordnungen liefern insbesondere in Lageranordnungen sehr genaue Ergebnisse, in denen die Messhülse gleichzeitig die Laufbahn(en) des entsprechenden Lagers aufweist.
- Auf die Messhülse ist ein Sensor oder sind mehrere Sensoren oder andere Messfühler, z.B. auf der Hülse und/oder auf dem Flansch und/oder am Boden aufgesetzt. Die Sensoren sind durch die Wand der Messhülse hindurch oder durch eine Ausnehmung in der Messhülse hindurch auf Signalgeber gerichtet. Derartige Signalgeber sind beispielsweise Encoder zur Drehzahlmessung oder optische Messanordnungen. Die Messhülse mit Sensor ist dabei relativ zur Stütze fest. Der Encoder ist dabei auf dem rotierenden Lagerring angeordnet.
- Die Messhülse ist mit wenigstens einem oder mit mehreren Messspalten bzw. Messöffnungen von definiertem und veränderlichem Durchlassquerschnitt versehen. Auf die Messöffnungen ist eine Messoptik, z.B. eine Lichtquelle, und ein geeigneter Sensor gerichtet. Die Messöffnungen sind in Abschnitte der Messhülse eingebracht, von denen erwartet wird, dass diese aufgrund der Lagerreaktionen auf Zug oder auf Druck belastet sind. Durch die Spannungen, die aufgrund dieser Reaktionen entstehen, vergrößert oder verkleinert sich der Durchlassquerschnitt in ein oder zwei Richtungen. Diese Änderungen werden von dem/den Sensoren erfasst und an eine entsprechende Auswerteeinrichtung weitergegeben.
- Einzelne Abschnitte der Messhülse verändern aufgrund von Belastungen ihre Lage durch Verkippung oder durch Verdrehung bzw. durch Ausdehnung oder durch Kompression relativ zueinander. Diese Veränderungen werden mit einer entsprechenden Sensorik erfasst. So ist es denkbar, Veränderungen der Lage der zylindrischen Messhülse zu dem Flansch durch Winkelmessungen zu erfassen. Dabei sind sowohl Messanordnungen zur Messung der Abweichungen von der Normallage der Rotationsachse in der Lageranordnung, wie Verkippung und Durchbiegung z.B. im Winkelmaß, als auch Verdrehungen gegeneinander um die Rotationsachse z.B. im Bogenmaß messbar.
- Die Verlagerungen einzelner Bauteile der Lageranordnung relativ zueinander wird gemessen. Derartige Veränderungen sind zum Beispiel die Verkippung des Innenringes zum stützenfesten Außenring oder die Verkippung des Außenringes zum stützenfesten Innenring. Messbar sind auch Veränderung des axialen Abstandes des Innenringes, einer Welle oder einer Achse zu dem Boden der Messhülse. Es ist zum Beispiel denkbar, das der Außenring der Lageranordnung gleichzeitig die Messhülse ist, auf der die Sensorik angeordnet ist. Mit der Sensorik werden axiale Annäherungen des Innenringes an den Boden der Messhülse oder radiale Annäherungen des Innenringes an die zylindrische Messhülse außen erfasst.

Die vorgenannten Anordnungen sind auch beliebig kombinierbar.

### Beschreibung der Zeichnungen

Die Erfindung ist nachfolgend anhand von Ausführungsbeispielen näher erläutert.

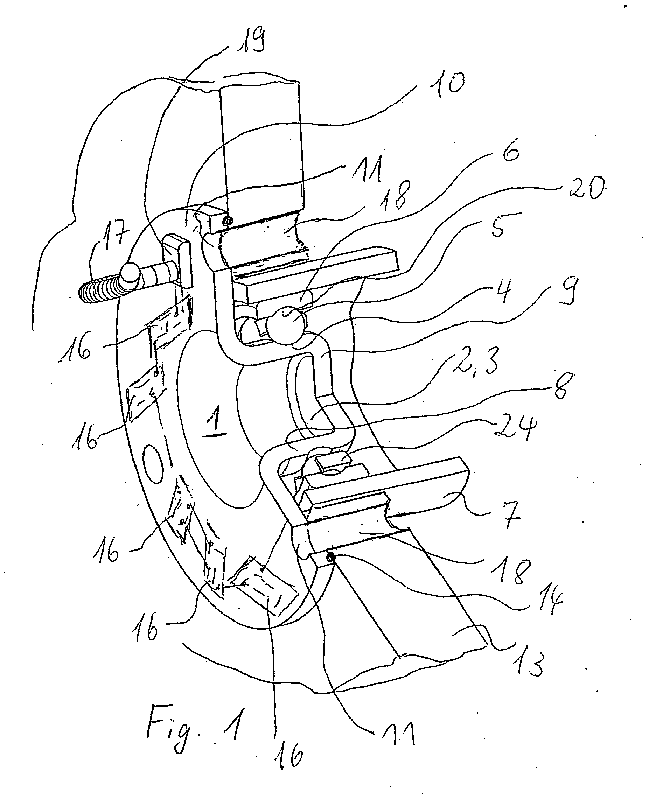

Figur 1 zeigt eine Lageranordnung 1 , bei der ein innerer Lagerring 2 die Messhülse 3 ist. Die Messhülse 3 weist außen eine Laufbahn 4 für eine in einem Käfig 24 gehaltene Reihe Wälzkörper 5 in Form von Kugeln auf. Die Laufbahn 4 ist vorzugsweise spanlos in die Messhülse 3 eingebracht.

Der innere Lagerring 2 ist von einem äußeren Lagerring 6 des Lagers der Lageranordnung 1 umfasst. An dem äußeren Lagerring 6 ist innen eine Laufbahn 20 für die Wälzkörper 5 ausgebildet. Der äußeren Lagerring 6 ist in ein Maschinenelement 7 eingepresst. Das Maschinenelement 7 ist stark vereinfacht als Hohlzylinder dargestellt und kann zum Beispiel eine Hohlwelle eines Getriebes sein.

Die Messhülse 3 ist ein napfförmig ausgebildetes Ziehteil mit einem hohlzylindrischen Abschnitt 8, mit einem Boden 9 und mit einem radial nach außen gerichteten Flansch 10.

Der radiale Flansch 10 ist mit Durchgangslöchern 11 versehen. Durch die Durchgangslöcher 11 greifen nicht dargestellte Befestigungselemente wie Schraubbolzen hindurch und in entsprechende Befestigungslöcher 18 der Stütze 13 ein. Die Lageranordnung 1 ist mit dem Flansch 10 an der nur angedeutet dargestellten Stütze 13 befestigt.

Die Stütze 13 ist zum Beispiel Bestandteil eines Getriebegehäuses. Die Messhülse 3 ist außen an der Stütze 13 fest und ragt mit dem hohlzylindrischen Abschnitt 8 frei durch eine Bohrung 15 hindurch. Die Verbindung ist mit einer Dichtung 14 abgedichtet.

Auf dem Flansch 10 sind eine Sensorik 19 und Messelemente 16 angebracht. Die Messelemente 16 sind zum Beispiel Dehnmesselemente. Das Maschinenelement 7 stützt sich belastet und unbelastet über die Wälzkörper 5 auf der Messhülse 3 ab. Die Belastungen der Messhülse 3 führen zu Zug-oder Druckspannungen an dem Flansch 10 und werden von den Messelementen 16 erfasst. Die Messergebnisse aus Verformungen werden zusammengeführt und über eine Leitung 17 zu einer nicht dargestellten Auswerteeinheit weitergeleitet und entsprechend ausgewertet.

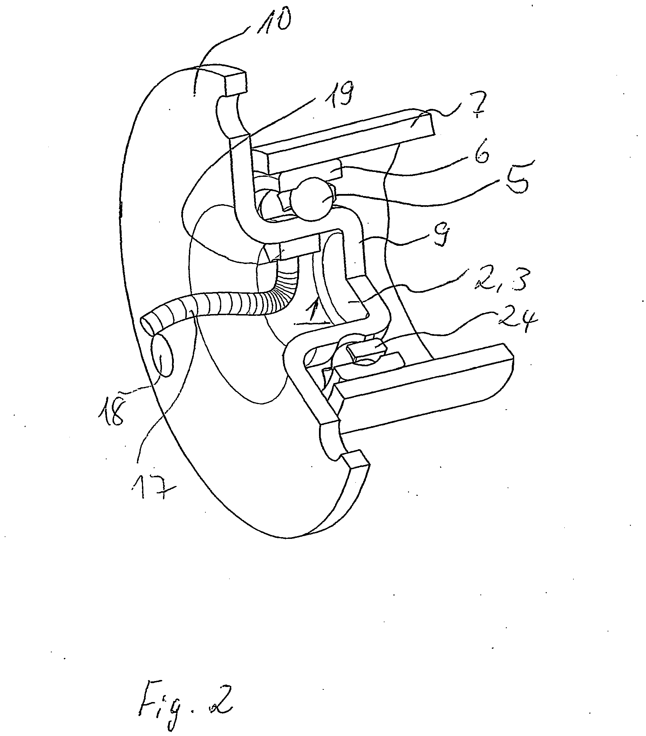

Figur 2 zeigt eine alternative Anordnung der Sensorik an der Messhülse 3. Die Sensorik19 ist innen in der Messhülse 3 im hohlzylindrischen Abschnitt 8 in unmittelbarer Nähe der Laufbahn 20 angebracht und deshalb beispielsweise zum Messen von Verformungen oder von Schall am Innenring der Lageranordnung geeignet.

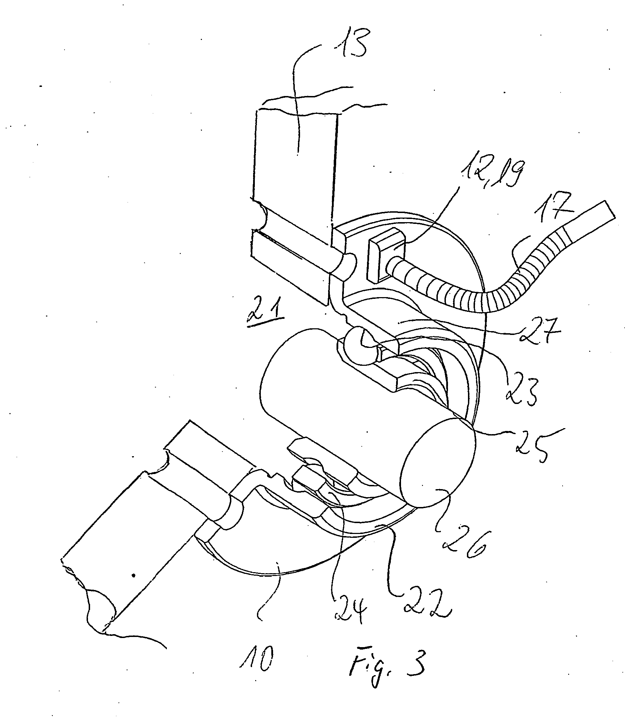

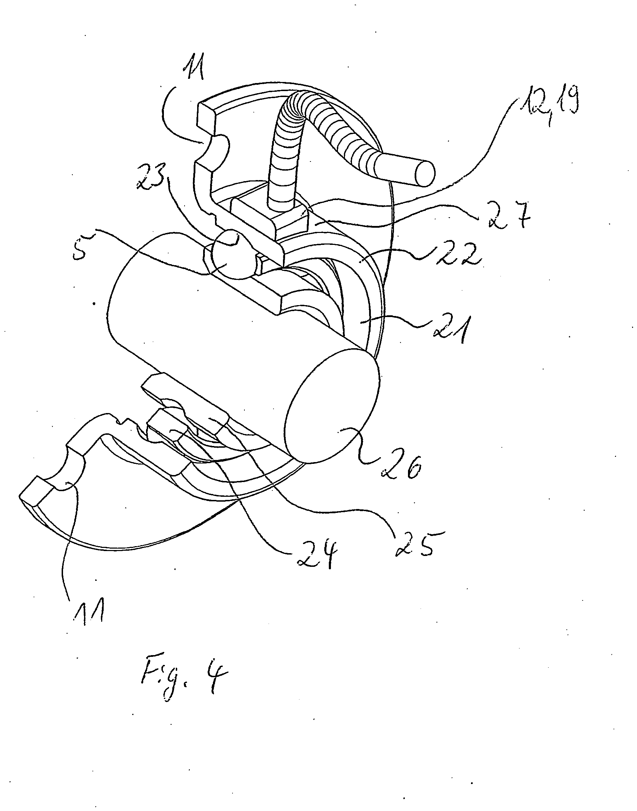

Figur 3 und 4 zeigen eine Lageranordnung 21 mit einer Messhülse 22. Die Messhülse 22 weist innen eine Laufbahn 23 für die Wälzkörper 5 auf. Die Wälzkörper 5 sind im Käfig 24 geführt und radial zwischen der Messhülse 22 und einem Innenring 25 angeordnet. Der Innenring 25 sitzt auf einem Maschinenelement 26 in Form einer Welle. Die Messhülse 22 weist den radial nach außen gerichteten Flansch 10 mit Durchgangslöchern 11 auf, mit dem die Lageranordnung 21 an der Stütze 13 innen oder außen aufgesetzt ist.

Die Sensorik 19 bzw. ein Messelement 12 ist in der Anordnung nach Figur 3 beispielsweise am Flansch 10 fest und in der Anordnung nach Figur 4 alternativ zu Figur 3 auf einem hohlzylindrischen Abschnitt 27 der Messhülse 22 angeordnet.

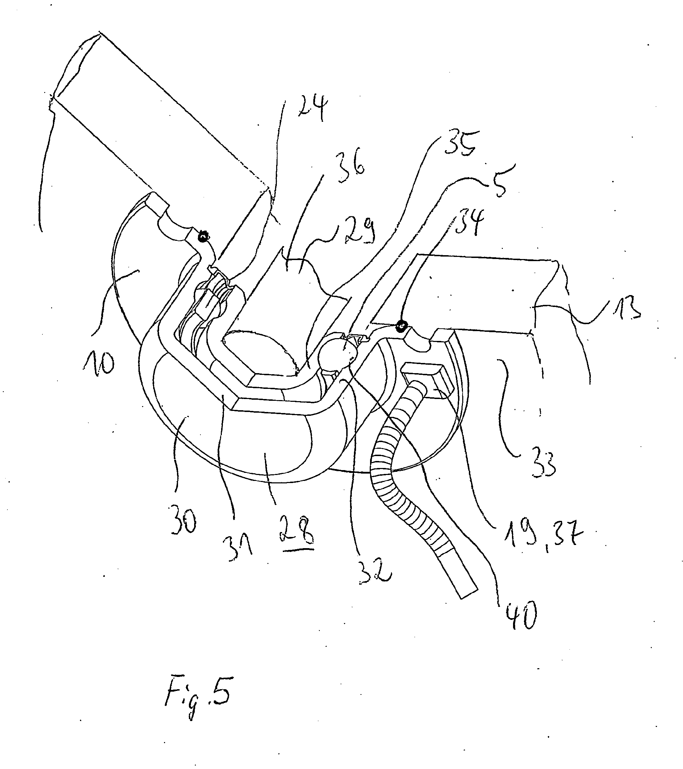

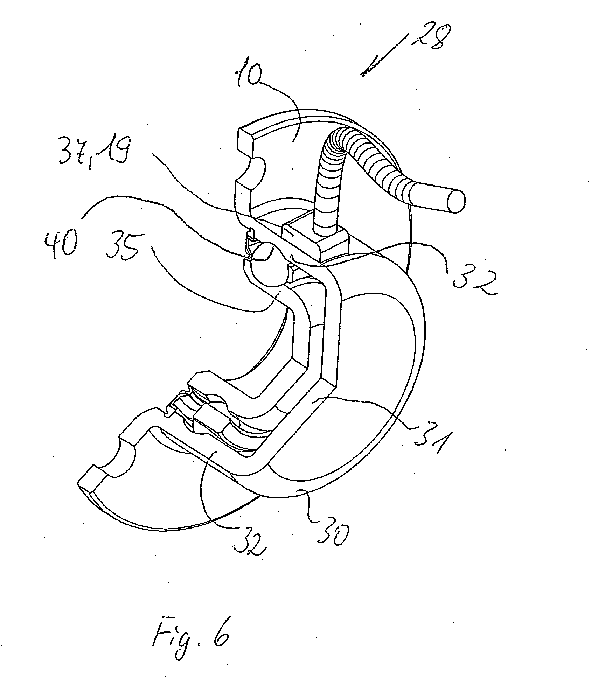

Figur 5 und Figur 6 zeigen eine nach außen geschlossenen Lageranordnung 28, die außen an der Stütze 13 angeflanscht ist. Die Lageranordnung 28 ist besonders für die Anwendungen an Lagerungen von Getriebewellen 29 geeignet, da die vormontierte und messtechnisch vorkalibrierte Lageranordnung 28 von außen auf ein Gehäuse 33 aufgesetzt werden kann. Die Lageranordnung 28 weist eine napfförmig ausgebildete Messhülse 30 mit einem geschlossenen Boden 31, einen hohlzylindrischen Abschnitt 32 und einen Flansch 10 auf. Die Lageranordnung 28 und das Gehäuse 33 sind durch die Messhülse 30 nach außen verschlossen. Der Sitz der Lageranordnung 28 auf dem Gehäuse ist mittels einer Dichtung 34 abgedichtet.

Die Messhülse 30 weist innen eine Laufbahn 40 für die Wälzkörper 5 auf. Das Lager ist weiter mit einem napfförmig ausgebildeten Innenring 35 versehen. Der Innenring 35 sitzt in dem in diesem Fall als Maschinenelement 36 ausgebildeten Getriebewelle 29. Die Sensorik 19 bzw. ein Messelement 37 sitzt wahlweise am Flansch 10 (Figur 5) oder an dem hohlzylindrischen Abschnitt 32 (Figur 6).

Es sind auch Lageranordnungen vorgesehen, bei der sowohl der hohlzylindrische Abschnitt und der Flansch, wahlweise auch innen oder außen mit Messelementen versehen sind.

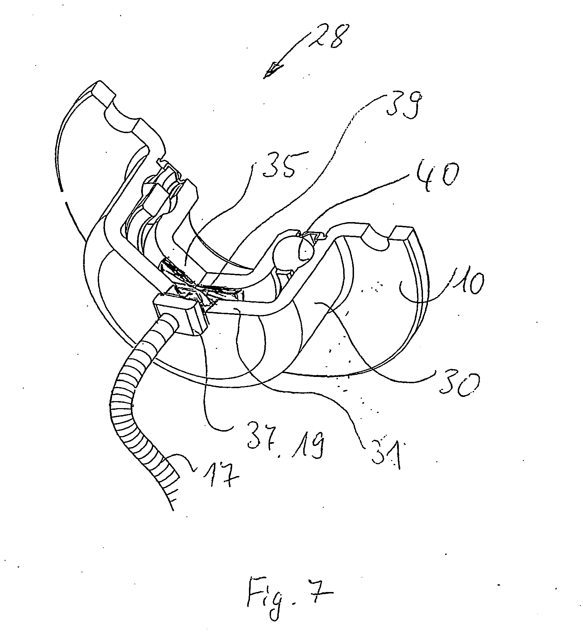

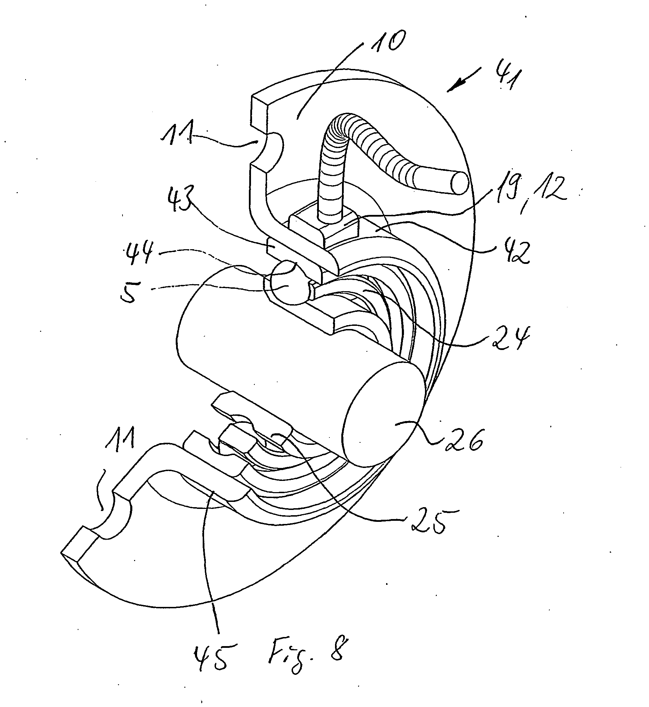

Figur 7 zeigt eine alternative Ausgestaltung der Lageranordnung 28, bei der wenigstens ein Messelement 37 oder eine Sensorik 19 am Boden 31 der Messhülse 30 angeordnet ist. Mit derartiger Sensorik 19 sind zum Beispiel Signale durch den geschlossenen Boden 31 oder, wie in Figur 7 dargestellt, durch eine Öffnung 38 erfassbar. So ist nach dem Beispiel aus Figur 7 der Abstand des Innenrings 35 zur Messhülse 30 in axiale Richtung messbar. Denkbar ist auch, dass der Innenring 35 stirnseitig mit einem wechselseitig polarisierten Signalgeber 39 versehen ist, so dass durch die Sensorik 19 die Drehzahl der Welle 29 messbar ist.

### Bezugszeichen

- 1: Lageranordnung
- 2: Lagerring innen
- 3: Messhülse
- 4: Laufbahn außen
- 5: Wälzkörper
- 6: Lagerring außen
- 7: Maschinenelement
- 8: hohlzylindrischer Abschnitt
- 9: Boden
- 10: Flansch
- 11: Durchgangsloch
- 12: Messelement
- 13: Stütze
- 14: Dichtung
- 15: Bohrung
- 16: Messelemente
- 17: Leitung
- 18: Befestigungsloch
- 19: Sensorik
- 20: Laufbahn innen
- 21: Lageranordnung
- 22: Messhülse
- 23: Laufbahn innen
- 24: Käfig
- 25: Innenring
- 26: Maschinenelement
- 27: hohlzylindrischer Abschnitt
- 28: Lageranordnung
- 29: Getriebewelle
- 30: Messhülse
- 31: Boden
- 32: hohlzylindrischer Abschnitt
- 33: Gehäuse
- 34: Dichtung
- 35: Innenring
- 36: Maschinenelement
- 37: Messelement
- 38: Öffnung
- 39: Signalgeber
- 40: Laufbahn innen
- 41: Lageranordnung
- 42: Messhülse
- 43: Lagerring
- 44: Laufbahn
- 45: Abschnitt

## Patentansprüche

1. Lageranordnung (1, 21, 28, 41) zur Lagerung wenigstens eines Maschinenelements (7, 26, 36) an einer Stütze (13), die Lageranordnung (1, 21, 28, 41) mit wenigstens einer Messhülse (3, 22, 30, 42) und mit mindestens einem Messelement (16, 37) an der Messhülse (3, 22, 30, 42), wobei die Messhülse (3, 22, 30, 42) separat zur Stütze (13) ausgebildet ist und wobei das Messelement (16, 37) zumindest zum Messen von physikalischen Größen und Prozessen in der Lageranordnung (1, 21, 28) vorgesehen ist, wobei die Lageranordnung (1, 21, 28, 41) an der Messhülse (3, 22, 30, 42) aufgenommen und mittels der Messhülse (3, 22, 30. 42) an der Stütze (13) befestigt ist, wobei das Maschinenelement (7, 26, 36) über die an der Stütze (13) feste Messhülse (3, 22, 30, 42) an der Stütze (13) abgestützt und and der Stütze (13) beweglich gelagert ist, **dadurch gekennzeichnet, dass** die Messhülse (3, 22, 30) ein aus kaltumgeformtem Blech hergestelltes Bauteil ist und wenigstens eine Laufbahn (4, 23, 40) für eine Reihe von Wälzkörpern (5) der Lageranordnung (1, 21, 28) aufweist.

2. Lageranordnung nach Anspruch 1, **dadurch gekennzeichnet, dass** die Laufbahn (4) umfangsseitig außen der Messhülse (3) ausgebildet ist.

3. Lageranordnung nach Anspruch 1, **dadurch gekennzeichnet, dass** die Laufbahn (23, 40) innen umfangsseitig der Messhülse (22, 30) ausgebildet ist.

4. Lageranordnung nach Anspruch 1, **dadurch gekennzeichnet, dass** die Messhülse (3, 30) napfförmig ausgebildet ist und einen Boden (9, 31) aufweist.

5. Lageranordnung nach Anspruch 1, **dadurch gekennzeichnet, dass** die zumindest teilweise hohlzylindrisch ausgebildete Messhülse (3, 22, 30, 41) einen radial gerichteten Flansch (10) aufweist, wobei die Messhülse (3, 22, 30, 41) mittels des Flansches (10) an die Stütze (13) angeflanscht ist.

6. Lageranordnung nach Anspruch 5, **dadurch gekennzeichnet, dass** die Stütze (13) Teil eines Gehäuses (33) ist, wobei die Messhülse (22, 30, 42) axial auf das Gehäuse (33) aufgesetzt ist und dadurch die Messhülse (22, 30, 42) axial von der Wand absteht.

7. Lageranordnung nach Anspruch 5, **dadurch gekennzeichnet, dass** die Messhülse (3) mit dem Lager zumindest teilweise durch die Stütze (13) hindurch ragt.

8. Lageranordnung nach Anspruch 1, **dadurch gekennzeichnet, dass** die Lageranordnung (1, 21, 28, 41) eine auf der Messhülse (3, 22, 30, 42) angeordnete Sensorik (19) zumindest zum Erfassen und Weiterleiten von Messergebnissen aus Messungen des Messelementes (16, 37) aufweist.

9. Lageranordnung nach Anspruch 1, **dadurch gekennzeichnet, dass** das Messelement (16) wenigstens ein Dehnmesselement auf der Messhülse (3) ist, wobei mit dem Dehnmesselement zumindest elastische Formänderungen in der Messhülse (3) messbar sind und wobei die Formänderungen Reaktionen aus Verlagerungen in der Messhülse (3) durch Belastungen auf das Maschinenelement (7) sind.

10. Lageranordnung nach Anspruch 1, **dadurch gekennzeichnet, dass** das Messelement (12, 37) wenigstens ein Sensor (19) ist.

11. Lageranordnung nach Anspruch 10, **dadurch gekennzeichnet, dass** der Sensor (19) auf die Messhülse (3, 22, 30) aufgesetzt und für das Erfassen von Zustandsänderungen in der Messhülse (3, 22, 30) vorgesehen ist.

12. Lageranordnung nach Anspruch 11, **dadurch gekennzeichnet, dass** der Sensor (19) wenigstens ein Temperaturfühler ist.

13. Lageranordnung nach Anspruch 11, **dadurch gekennzeichnet, dass** der Sensor (19, 37) an der Messhülse (30) befestigt ist und durch die Messhülse (30) hindurch auf wenigstens einen am Lager befestigten Signalgeber (39) gerichtet ist.

14. Lageranordnung nach Anspruch 12, **dadurch gekennzeichnet, dass** der Sensor (19, 37) auf einen zum Sensor (19, 37) relativ beweglichen Signalgeber (39) gerichtet ist.

## Claims

1. Bearing arrangement (1, 21, 28, 41) for mounting at least one machine element (7, 26, 36) on a support (13), the bearing arrangement (1, 21, 28, 41) having at least one measuring sleeve (3, 22, 30, 42) and having at least one measuring element (16, 37) on the measuring sleeve (3, 22, 30, 42), the measuring sleeve (3, 22, 30, 42) being configured separately from the support (13) and the measuring element (16, 37) being provided at least for measuring physical variables and processes in the bearing arrangement (1, 21, 28), the bearing arrangement (1, 21, 28, 41) being received on the measuring sleeve (3, 22, 30, 42) and being fastened to the support (13) by means of the measuring sleeve (3, 22, 30, 42), the machine element (7, 26, 36) being supported on the support (13) via the measuring sleeve (3, 22, 30, 42) fixed on the support (13) and being mounted movably on the support (13), **characterized in that** the measuring sleeve (3, 22, 30) is a component produced from cold-formed sheet metal and has at least one raceway (4, 23, 40) for a row of rolling bodies (5) of the bearing arrangement (1, 21, 28).

2. Bearing arrangement according to Claim 1, **characterized in that** the raceway (4) is configured circumferentially on the outside of the measuring sleeve (3).

3. Bearing arrangement according to Claim 1, **characterized in that** the raceway (23, 40) is configured circumferentially on the inside of the measuring sleeve (22, 30).

4. Bearing arrangement according to Claim 1, **characterized in that** the measuring sleeve (3, 30) is of bowl-like configuration and has a base (9, 31).

5. Bearing arrangement according to Claim 1, **characterized in that** the measuring sleeve (3, 22, 30, 42) which is of at least partially hollow-cylindrical configuration has a radially oriented flange (10), the measuring sleeve (3, 22, 30, 42) being flange-connected to the support (13) by means of the flange (10).

6. Bearing arrangement according to Claim 5, **characterized in that** the support (13) is part of a housing (33), the measuring sleeve (22, 30, 42) being placed axially onto the housing (33) and the measuring sleeve (22, 30, 42) protruding axially from the wall as a result.

7. Bearing arrangement according to Claim 5, **characterized in that** the measuring sleeve (3) protrudes with the bearing at least partially through the support (13).

8. Bearing arrangement according to Claim 1, **characterized in that** the bearing arrangement (1, 21, 28, 41) has a sensor system (19) which is arranged on the measuring sleeve (3, 22, 30, 42) at least for sensing and forwarding measured results from measurements of the measuring element (16, 37).

9. Bearing arrangement according to Claim 1, **characterized in that** the measuring element (16) is at least one strain element on the measuring sleeve (3), it being possible for at least elastic dimensional changes to be measured in the measuring sleeve (3) by way of the strain element, and the dimensional changes being reactions from displacements in the measuring sleeve (3) as a result of loads on the machine element (7).

10. Bearing arrangement according to Claim 1, **characterized in that** the measuring element (16, 37) is at least one sensor (19).

11. Bearing arrangement according to Claim 10, **characterized in that** the sensor (19) is placed onto the measuring sleeve (3, 22, 30) and is provided for sensing state changes in the measuring sleeve (3, 22, 30).

12. Bearing arrangement according to Claim 11, **characterized in that** the sensor (19) is at least one temperature sensor.

13. Bearing arrangement according to Claim 11, **characterized in that** the sensor (19, 37) is fastened to the measuring sleeve (30) and is directed through the measuring sleeve (30) toward at least one signal generator (39) which is fastened to the bearing.

14. Bearing arrangement according to Claim 12, **characterized in that** the sensor (19, 37) is directed toward a signal generator (39) which can move relative to the sensor (19, 37).

## Revendications

1. Ensemble de palier (1, 21, 28, 41) pour le logement d'au moins un élément de machine (7, 26, 36) sur un support (13), l'ensemble de palier (1, 21, 28, 41) avec au moins une douille de mesure (3, 22, 30, 42) et avec au moins un élément de mesure (16, 37) sur la douille de mesure (3, 22, 30, 42), dans lequel la douille de mesure (3, 22, 30, 42) est réalisée séparément du support (13) et dans lequel l'élément de mesure (16, 37) est prévu au moins pour la mesure de grandeurs et de processus physiques dans l'ensemble de palier (1, 21, 28), dans lequel l'ensemble de palier (1, 21, 28, 41) est logé sur la douille de mesure (3, 22, 30, 42) et est fixé au support (13) au moyen de la douille de mesure (3, 22, 30, 42), dans lequel l'élément de machine (7, 26, 36) est appuyé sur le support (13) au moyen de la douille de mesure (3, 22, 30, 42) fixe sur le support (13) et est logé de façon mobile sur le support (13), **caractérisé en ce que** la douille de mesure (3, 22, 30) est un composant fabriqué à partir d'une tôle déformée à froid et présente au moins un chemin de roulement (4, 23, 40) pour une série de corps de roulement (5) de l'ensemble de palier (1, 21, 28).

2. Ensemble de palier selon la revendication 1 **caractérisé en ce que** le chemin de roulement (4) est formé sur le côté de la périphérie extérieurement à la douille de mesure (3).

3. Ensemble de palier selon la revendication 1, **caractérisé en ce que** le chemin de roulement (23, 40) est formé sur le côté de la périphérie intérieurement à la douille de mesure (22, 30).

4. Ensemble de palier selon la revendication 1, **caractérisé en ce que** la douille de mesure (3, 30) est réalisée en forme de cuvette et présente un fond (9, 31).

5. Ensemble de palier selon la revendication 1, **caractérisé en ce que** la douille de mesure (3, 22, 30, 42) réalisée sous forme au moins partiellement cylindrique creuse présente une bride (10) orientée radialement, dans lequel la douille de mesure (3, 22, 30, 42) est attachée au support (13) au moyen de la bride (10).

6. Ensemble de palier selon la revendication 5, **caractérisé en ce que** le support (13) fait partie d'un boîtier (33), dans lequel la douille de mesure (22, 30, 42) est montée axialement sur le boîtier (33) et la douille de mesure (22, 30, 42) est de ce fait saillante axialement sur la paroi.

7. Ensemble de palier selon la revendication 5, **caractérisé en ce que** la douille de mesure (3) avec le palier passe au moins partiellement à travers le support (13)

8. Ensemble de palier selon la revendication 1, **caractérisé en ce que** l'ensemble de palier (1, 21, 28, 41) présente un système détecteur (19) disposé sur la douille de mesure (3, 22, 30, 42) pour détecter et retransmettre des résultats de mesure à partir de mesures de l'élément de mesure (16, 37).

9. Ensemble de palier selon la revendication 1, **caractérisé en ce que** l'élément de mesure (16) est au moins un élément de mesure de dilatation sur la douille de mesure (3), dans lequel au moins des changements de forme élastiques dans la douille de mesure (3) peuvent être mesurés avec l'élément de mesure de dilatation et dans lequel les changements de forme sont des réactions à des déplacements dans la douille de mesure (3) dus à des charges sur l'élément de machine (7).

10. Ensemble de palier selon la revendication 1, **caractérisé en ce que** l'élément de mesure (16, 37) est au moins un détecteur (19).

11. Ensemble de palier selon la revendication 10, **caractérisé en ce que** le détecteur (19) est monté sur la douille de mesure (3, 22, 30) et est prévu pour la détection de changements d'état dans la douille de mesure (3, 22, 30).

12. Ensemble de palier selon la revendication 11, **caractérisé en ce que** le détecteur (19) est au moins un capteur de température.

13. Ensemble de palier selon la revendication 11, **caractérisé en ce que** le détecteur (19, 37) est fixé sur la douille de mesure (30) et est orienté à travers la douille de mesure (30) vers au moins un émetteur de signal (39) fixé sur le palier.

14. Ensemble de palier selon la revendication 12, **caractérisé en ce que** le détecteur (19, 37) est orienté vers un émetteur de signal (39) mobile par rapport au détecteur (19, 37).
